# FASCICULE DE BREVET EUROPEEN

(11) **EP 4 419 866 B1**
(45) Date de publication et mention de la délivrance du brevet: **02.12.2026**
(21) Numéro de dépôt: 22808730.0
(22) Date de dépôt: 21.10.2022
(51) Int. Cl.: G01B 9/0209, G01M 11/02, G01B 11/24

(54) **PROCÉDÉ DE CARACTÉRISATION FONCTIONNELLE D'OBJECTIFS OPTIQUES**
VERFAHREN ZUR FUNKTIONELLEN CHARAKTERISIERUNG OPTISCHER LINSEN
METHOD FOR THE FUNCTIONAL CHARACTERISATION OF OPTICAL LENSES

(30) Priorité: 21.10.2021 FR 2111204
(43) Date de publication de la demande: 28.08.2024
(73) Titulaire: Fogale Nanotech, 30900 Nîmes (FR)
(72) Inventeur: LEGROS, Eric, 30900 Nîmes (FR); PETITGRAND, Sylvain, 30132 Caissargues (FR)
(74) Mandataire: IPAZ
(86) Numéro de dépôt international: PCT/EP2022/079416
(87) Numéro de publication internationale: WO 2023/067158

(56) Documents cités:
- WO-A1-2019/147936
- WO-A1-2020/245511

## Description

La présente invention concerne un procédé de caractérisation d'un objectif optique, en particulier pendant ou après sa fabrication, en vue de déterminer un indicateur de performance fonctionnelle. Elle concerne également un dispositif de caractérisation d'objectifs optiques mettant en œuvre un tel procédé. Elle concerne en outre un procédé et un système de fabrication d'objectifs optiques mettant en œuvre un tel procédé, ou dispositif, de caractérisation.

Le domaine de l'invention est le domaine de la caractérisation qualitative des objectifs optiques.

### État de la technique

Les objectifs optiques sont utilisés dans divers appareils, tels que par exemple des caméras, des appareils photos, des Smartphones, etc. pour imager une scène, ou alors en tant que source lumineuse, pour projeter des motifs, éclairer une scène, etc.

Un objectif optique est constitué d'un empilement de lentilles optiques convergentes, divergentes, asphériques, ou éventuellement d'autres formes complexes, séparées entre-elles par un espace vide, également appelé « air gap » en anglais, ou par une entretoise, également appelé « spacer » en anglais. Elles sont généralement assemblées via un dispositif que l'on appelle fût ou barillet. Une fois assemblé, l'objectif optique est testé pour déterminer une donnée de performance relative au fonctionnement dudit objectif, principalement pour valider ou non la qualité fonctionnelle dudit objectif.

Il existe actuellement différentes techniques pour tester un objectif optique lors de sa fabrication.

On connait des techniques de test par des mesures fonctionnelles, telles que par exemple la technique de caractérisation par Fonction de Modulation de Transfert, appelé « MTF » pour « Modulation Transfer Function » en anglais. Cette technique permet, par relevé de contraste en plusieurs points de mesure sur l'objectif optique, de valider ou non les performances dudit objectif optique en fin de fabrication. Les techniques de test par des mesures fonctionnelles, et en particulier la technique MTF, sont des techniques chronophages. De plus, ces techniques se concentrent sur l'objectif optique après sa fabrication, de sorte que lorsque l'objectif optique testé n'est pas performant, sa fabrication constitue entièrement une perte de temps et d'argent.

Il existe aussi une technique pour caractériser individuellement les éléments optiques composant l'objectif optique, avant sa fabrication. Cette technique prévoit de mesurer des valeurs de paramètres individuels sur chaque élément optique de l'objectif et de comparer cette valeur à des fourchettes de tolérances prédéterminées. Cependant, le nombre de paramètres mis en jeu dans cette technique peut être important, ce qui rend ces techniques chronophages aussi. De plus, il est en réalité difficile de prévoir les corrélations entre les paramètres individuels de chaque élément optique d'un objectif optique et sa performance finale. En effet, il a été observé que maintenir les paramètres individuels d'un élément optique dans une fourchette de valeurs ne garantit pas nécessairement la performance d'un objectif optique fabriqué qui va aussi dépendre du contexte des autres paramètres individuels et des combinaisons favorables ou non des paramètres dans leur fourchette de valeurs. Ces situations montrent que la technique existante n'est pas très efficace. Des exemples de procédés et de dispositifs pour mesurer des paramètres géométriques de lentilles d'objectifs optiques sont décrits par les documents WO2019/147936A1 et WO2020/245511A1.

Un but de la présente invention est de remédier à au moins un des inconvénients précités.

Un autre but de l'invention est de proposer une solution de caractérisation d'objectifs optiques moins chronophage.

Un autre but de l'invention est de proposer une solution de caractérisation d'objectifs optiques plus simple et plus évolutifs en fonction de l'architecture des objectifs optiques.

Il est aussi un autre but de l'invention de proposer une solution de caractérisation d'objectifs optiques plus performante.

### Exposé de l'invention

L'invention propose d'atteindre au moins l'un des buts précités par procédé de caractérisation fonctionnelle, en cours de fabrication ou après fabrication, d'un objectif optique, dit cible, comprenant plusieurs éléments optiques, ledit procédé comprenant une phase de caractérisation dudit objectif cible comprenant les étapes suivantes et réalisée après empilement desdits éléments optiques :
- mesure, par interférométrie optique sur ledit empilement d'éléments optiques, d'au moins un jeu de données, dit jeu optique mesuré, comprenant des données relatives à au moins un paramètre géométrique de chacune d'au moins deux interfaces optiques dudit objectif cible ; et
- fourniture, en fonction dudit au moins un jeu optique mesuré, d'un jeu de données, dit jeu de performance estimé, comprenant des données estimées relatives à la performance dudit objectif cible, par un modèle de caractérisation préalablement entrainé avec une base, dite base d'entrainement, de jeux d'entrainements constituée à partir d'objectifs optiques d'architecture identique à celle dudit objectif cible.

Ainsi, le procédé selon l'invention propose de prédire, lors de sa fabrication, la performance fonctionnelle d'un objectif optique comprenant un empilement de plusieurs éléments optiques, en fonction de mesures d'interférométrie optiques relatives aux interfaces optiques dudit objectif, sans avoir à réaliser de mesure fonctionnelle relative audit objectif optique, par exemple par une méthode de type MTF. De plus, l'invention propose de caractériser un objectif optique sans avoir à caractériser individuellement chaque élément optique de l'objectif optique. Ainsi, la solution proposée par la présente invention est moins chronophage et plus simple que les solutions actuelles.

De plus, dans la présente invention, le jeu optique mesuré est déterminé par interférométrie optique sur un ensemble des éléments optiques formant l'objectif après que lesdits éléments optiques sont empilés, et non sur chaque élément optique individuellement. Ainsi, la caractérisation est réalisée en prenant en compte au moins un des éléments optiques, mais aussi son association avec d'autres éléments optiques formant l'objectif optique, ce qui permet une caractérisation plus complète et plus proche de la réalité, et donc plus réaliste et plus performante.

Avantageusement, selon l'invention le jeu optique mesuré est obtenu par une mesure effectuée uniquement depuis une face, ou un côté, de l'empilement sans avoir à retourner ledit empilement. Ainsi, le jeu optique mesuré est obtenu de manière plus rapide. Dans ce cas, l'interférométrie optique permet de mesurer des données relatives à chaque interface optique de l'objectif, y compris chaque interface optique, dite enterrée, c'est-à-dire une interface optique qui n'est visible uniquement au travers d'une autre interface optique dudit objectif.

Les éléments optiques composant un objectif optique sont empilés suivant une direction d'empilement, également appelé axe Z dans la suite, ou encore l'axe de l'objectif optique. Le plan perpendiculaire à l'axe Z, c'est-à-dire le plan selon lequel chaque élément optique s'étend, est appelé le plan X-Y dans la suite.

Dans la présente demande, l'étape de mesure permet d'obtenir un jeu optique mesuré relatif à la géométrie des interfaces optiques de l'objectif, également appelé « paramètre géométrique » de l'interface.

Par « paramètre géométrique d'une interface optique », on entend, par exemple, et sans perte de généralité :
- une position de l'interface optique au sein de l'objectif, selon l'axe Z ;
- une position d'un APEX de l'interface optique, en particulier dans le plan X-Y et/ou
- une position d'un APEX de l'interface optique, en particulier selon l'axe Z,
- une inclinaison (TIP et/ou TILT) de ladite interface optique par rapport à l'axe Z,
- un décentrement d'une interface optique, ou d'un élément optique, par rapport à l'axe Z, dans le plan X-Y.

Par « interface optique enterrée », on entend une interface qui, lors de la mesure d'interférométrie optique, n'est visible que par l'intermédiaire d'au moins une autre interface optique. L'au moins une autre interface optique au travers de laquelle l'interface enterrée est visible peut être une interface optique d'un même élément optique, ou une interface optique d'un autre élément optique.

Deux objectifs optiques ont une architecture identique lorsque chacun de ces objectifs comprennent par conception des éléments optiques identiques empilés par conception de manière identique.

Selon l'invention, l'étape de mesure est réalisée par interférométrie optique.

L'interférométrie optique peut être réalisée avec un appareil d'interférométrie optique, qui selon l'invention, permet de mesurer au moins une donnée relative à une géométrie d'au moins une interface optique de l'objectif cible. Suivant un exemple de réalisation particulier, l'appareil d'interférométrie optique comprend une source de lumière à faible cohérence émettant, en direction de l'empilement d'éléments optiques, et plus particulièrement selon l'axe Z, un faisceau de lumière, appelé faisceau de mesure. Le faisceau de mesure, illumine l'empilement d'éléments optiques en un point de mesure plus ou moins large selon la focalisation dans le plan X-Y, et parcourt alors l'empilement d'éléments optiques, en particulier dans la direction d'empilement, et traverse chaque interface optique à tour de rôle. À chaque interface optique, une partie du faisceau est réfléchie, et constitue un faisceau réfléchi. Ce faisceau réfléchi est alors capté par un capteur se trouvant du même côté que la source d'émission, et est caractérisé par interférométrie optique avec un faisceau de référence provenant aussi de la source de lumière. Par « zone de cohérence », on entend la zone dans laquelle des interférences entre le faisceau de mesure et le faisceau de référence peuvent se former sur le capteur. La zone de cohérence peut être déplacée en variant la différence de la longueur du chemin optique entre les deux faisceaux, par exemple en modifiant la longueur optique d'un des faisceaux ou des deux. L'appareil d'interférométrie optique permet de détecter sélectivement un signal d'interférence pour chaque interface au niveau de laquelle la zone de cohérence est positionnée, c'est-à-dire pour chaque surface se trouvant dans la zone de cohérence. Préférentiellement, la longueur de cohérence de la source lumineuse est ajustée de sorte à être plus courte qu'une distance optique minimale entre deux interfaces adjacentes de l'élément optique. Ainsi, pour chaque mesure, une seule interface se trouve dans la zone de cohérence, et donc, un signal d'interférence acquis ne comprend que la contribution d'une seule interface, ou ne provient que d'une seule interface. Les mesures des interférences sont effectuées selon un champ de vue déterminé par les moyens de mesure du dispositif.

Selon un mode de réalisation, l'appareil interférométrique peut opérer en mode point en étant configuré pour détecter un signal d'interférence ponctuel en un point du champ de vue ou en un détecteur ponctuel. Le jeu optique mesuré peut être, ou peut comprendre, le signal d'interférence ou l'interférogramme qui est un signal d'intensité fonction du déplacement de la zone de cohérence le long de l'axe z. Le signal d'interférence peut, par exemple, être vu comme une succession de raies d'interférence associées à chaque interface optique.

Alternativement ou en plus, l'appareil d'interférométrie optique peut comprendre un capteur interférométrique, dit capteur interférométrique en plein champ, configuré pour détecter un signal d'interférence en plein champ dans un champ de vue et représenté, par exemple, sous la forme d'une image 2D (image d'interférence) grâce à l'élément de détection.

Une interface à mesurer peut ainsi être imagée selon le champ de vue en une seule mesure ou par balayage d'un faisceau.

Dans un exemple particulier de mise en œuvre, un signal de mesure peut être formé par un signal d'interférence ponctuel associé à un pixel de l'élément de détection dont l'intensité est détectée suivant le déplacement en Z de la zone de cohérence.

Selon un exemple, le dispositif interférométrique peut comprendre un capteur interférométrique avec un interféromètre de Michelson. Selon un autre exemple, le dispositif interférométrique peut comprendre un capteur interférométrique avec un interféromètre de Mach-Zehnder.

Selon des modes de réalisation, un appareil d'interférométrie en mode point et un appareil d'interférométrie en plein champ peuvent être associés.

La mesure d'interférométrie optique entre le faisceau de mesure et le faisceau de référence permet de fournir des données de mesure brutes qui comprennent, pour des interfaces optiques :
- **en mode point** : au moins une raie d'interférence dont la position et l'amplitude dépendent de la distance géométrique à laquelle se trouve ladite interface optique, par rapport à un point/plan de référence, au point de mesure. En particulier, le point/plan de référence est le point/plan d'émission de l'onde de mesure, ou alors d'une interface de référence connue faisant partie du dispositif de mesure. Ainsi, la position d'une raie d'interférence permet de déterminer la distance à laquelle se trouve l'interface optique qui lui est associée, au point de mesure.
- **en mode plein champ** : une séquence de signaux d'interférence 2D acquis pour une pluralité de différences de trajets optiques permettant d'obtenir des informations de forme des interfaces optiques. Ces séquences peuvent être acquises de différentes manières selon la technique d'analyse mise en œuvre. La pluralité de signaux d'interférence 2D peut notamment être acquise selon une méthode interférométrique par décalage de phase ou selon une méthode interférométrique par balayage vertical. Selon un autre mode de réalisation nullement limitatif, le signal d'interférence peut être traité par un procédé de calcul par holographie numérique. Typiquement, les signaux d'interférence 2D comportent une information d'amplitude et une information de phase. Des images associées à ces informations d'amplitude et des images associées à ces informations de phase peuvent être construites à partir des signaux d'interférence.

Selon des modes de réalisation, l'étape de mesure peut réaliser une unique mesure fournissant un seul jeu optique mesuré. Dans ce cas, c'est cet unique jeu optique qui est donné en entrée du modèle de caractérisation fonctionnelle, éventuellement après traitement.

Par exemple, l'étape de mesure peut réaliser une seule mesure d'interférométrie optique sur l'empilement d'éléments optiques. Une telle mesure d'interférométrie peut par exemple fournir un jeu optique comprenant :
- des données mesure brutes représentant le signal d'interférence,
- des données de mesure brutes relatives à des positions, et éventuellement à des amplitudes, de raies d'interférence ;
- des données de mesure, dites brutes, relatives à des images d'interférence d'un élément optique, contenant des informations d'intensité et des informations de phases;
- des valeurs de distance entre les interfaces optiques, ou les éléments optiques, obtenues par traitement des données brutes ;
- des données de topographie obtenues par traitement des données brutes ;
- de données d'épaisseur de chaque élément optique ;
- des données de position selon l'axe Z ;
- des données d'alignement par rapport à l'axe Z dans le plan X-Y ; ou
- des données d'inclinaison par rapport à l'axe Z.

Suivant des modes de réalisation, l'étape de mesure peut réaliser plusieurs mesures d'interférométrie optique fournissant un ou plusieurs jeu(x) optique(s) mesuré(s).

Par exemple, les données acquises lors de plusieurs mesures d'interférométrie optique peuvent être traitées pour fournir un unique jeu optique, par consolidation ou par concaténation des données obtenues pour chaque mesure. Alternativement, chaque mesure d'interférométrie optique peut fournir un jeu optique mesuré.

Par exemple, l'étape de mesure peut fournir une combinaison quelconque d'au moins un des jeux optiques mesurés suivants :
- un jeu optique mesuré relatif aux positions des interfaces optiques, ou des éléments optiques, selon l'axe Z : un tel jeu optique mesuré peut être obtenu par une ou plusieurs mesures d'interférométrie optique ;
- un jeu optique mesuré relative aux épaisseurs des éléments optiques, selon l'axe Z : un tel jeu optique mesuré peut être obtenu par une ou plusieurs mesures d'interférométrie optique ;
- un jeu optique mesuré de profil de surface des interfaces optiques : un tel jeu optique mesuré peut être obtenu par une ou plusieurs mesures d'interférométrie optique ;
- un jeu optique mesuré relatif à un décentrement de chaque interface, ou élément optique, de l'empilement par rapport à l'axe de Z ou relativement à une position de centre d'une autre interface, dans le plan X-Y ;
- un jeu optique mesuré relatif à une inclinaison de chaque interface, ou élément optique, de l'empilement par rapport à l'axe de Z ou relativement à l'inclinaison d'une autre interface.

Suivant des modes de réalisation, au moins un jeu optique peut comprendre, une partie ou la totalité, des valeurs de mesure brutes fournies par au moins une mesure d'interférométrie optique.

Par exemple, le jeu optique mesuré peut comprendre le signal d'interférence mesuré.

Par exemple, le jeu optique peut comprendre des données brutes représentant, pour au moins une raie d'interférence, la position, et éventuellement l'amplitude de ladite raie d'interférence.

Selon un autre exemple, le jeu optique mesuré peut comprendre des données brutes représentant l'image d'amplitude et/ou l'image de phase associées à une image d'interférence.

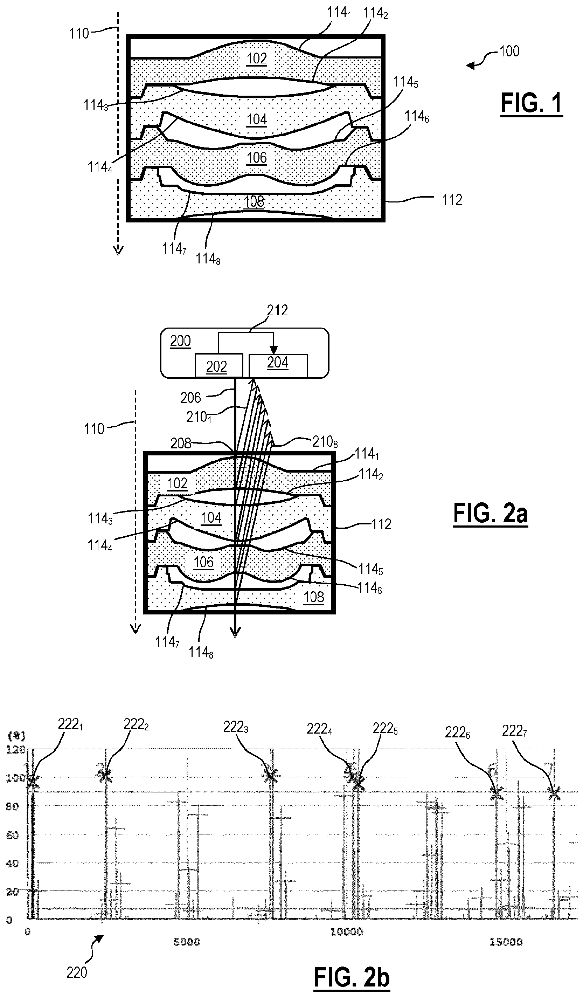

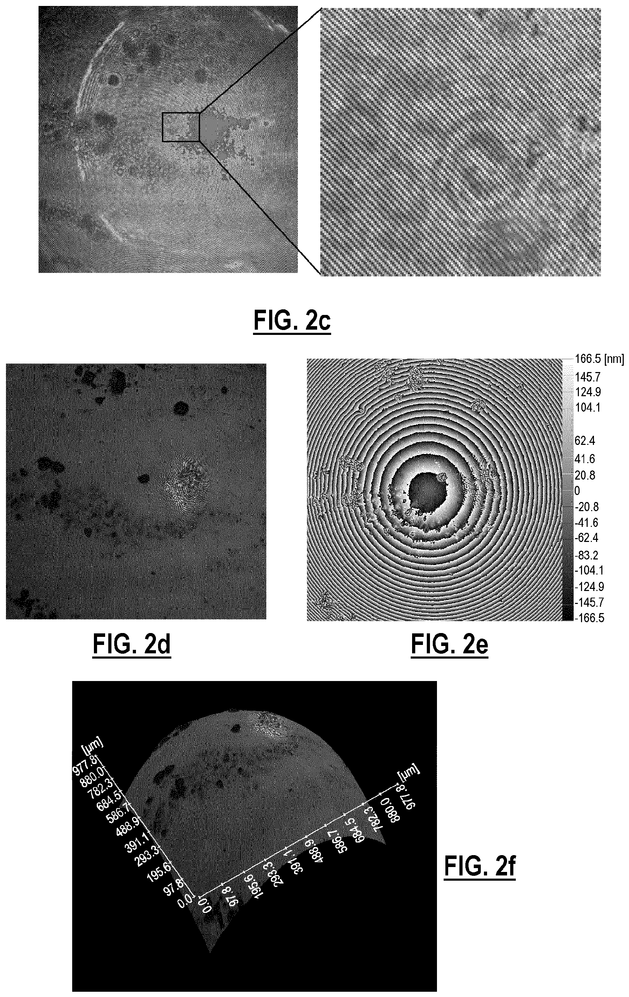

Un exemple de données brutes de mesure est donné plus loin en référence à la FIGURE 2b pour un exemple d'interférométrie en mode point et à en référence aux FIGURES 2c-2f pour un exemple d'interférométrie en mode plein champ.

Suivant des modes de réalisation, au moins un jeu optique mesuré peut comprendre au moins une valeur géométrique relative à au moins une interface optique de l'objectif, l'étape de mesure comprenant les étapes suivantes :
- au moins une mesure d'interférométrie optique fournissant, chacune, des données brutes, et
- calcul de ladite au moins une valeur géométrique par traitement desdites données brutes.

Une telle donnée géométrique peut comprendre l'une quelconque des données suivantes :
- au moins une valeur de position d'une interface, ou d'un élément, optique de l'objectif ;
- au moins une valeur d'épaisseur d'un élément optique de l'objectif ;
- au moins une valeur de décentrement d'au moins une interface, ou d'un élément, optique par rapport à l'axe Z, ou relativement à une position de centre d'une autre interface, dans le plan X-Y ; ou
- au moins une valeur d'inclinaison d'au moins une interface, ou d'un élément, optique par rapport à l'axe Z, ou relativement à l'inclinaison une autre interface.
- au moins une valeur de topographie ou de profil de forme d'au moins une interface.

La position selon l'axe Z d'une interface optique peut être déterminée comme étant la position d'une raie d'interférence correspondant à ladite interface.

L'épaisseur d'un élément optique, selon l'axe Z, peut être déterminée en calculant la distance entre les raies d'interférence correspondant à chacune des interfaces optiques dudit élément optique.

La position d'une interface optique par rapport à l'axe Z peut être déterminée en effectuant plusieurs mesures d'interférométrie optique, en particulier dans une zone centrale de l'objectif optique. En suivant, sur les plusieurs mesures, la position, selon l'axe Z, de la raie d'interférence associée à ladite interface, il est possible de déterminer la position de l'APEX de ladite interface optique. La position de l'APEX de l'interface optique permet de déterminer la position de ladite interface par rapport à l'axe Z, dans le plan X-Y, et donc son décentrement par rapport à l'axe Z.

Dans un autre exemple, la position d'une interface par rapport à l'axe Z peut être obtenue, par exemple, par détection d'une image d'interférence de l'interface dans une zone centrale de l'objectif optique et analyse de cette image et/ou analyse des images d'amplitudes ou de phases associées, notamment pour obtenir un profil de cette surface et la position de l'APEX de ladite interface optique.

La position d'un élément optique par rapport à l'axe Z peut être déterminée en fonction des positions de ces interfaces optiques.

L'inclinaison d'une interface optique par rapport à l'axe Z peut être déterminée en effectuant plusieurs mesures d'interférométrie optique, en particulier dans une zone périphérique de l'objectif optique. En suivant, sur les plusieurs mesures, la position dans l'axe Z, de la raie d'interférence associée à ladite interface, il est possible de déterminer la position de l'interface selon l'axe au niveau de ses bords, ce qui permet de déterminer l'inclinaison de ladite interface par rapport à l'axe Z.

L'inclinaison d'un élément optique par rapport à l'axe Z peut être déterminée en fonction des inclinaisons de ses interfaces optiques.

Il est également possible de déterminer chacun de ces paramètres géométriques en utilisant l'amplitude d'une raie d'interférence, en plus ou à la place de la position de la raie d'interférence.

A titre indicatif, pour un objectif réalisé par un empilement de N lentilles, on peut considérer pour chaque lentille un paramètre pour l'indice de réfraction et éventuellement un second pour sa dispersion chromatique si elle est décorrélée, 4 paramètres pour le tilt et le centrage par face de lentille, 2 paramètres pour l'épaisseur et l'air-gap, soit un total de (10xN-1) à (11 x N - 1) paramètres décrivant l'empilement.

Des équipements commercialement disponibles de mesure de la performance l'évaluent par exemple en 27 points de l'écran. Ainsi, suivant un exemple de réalisation non limitatif, le modèle de caractérisation peut être envisagé pour modéliser les relations entre ces (10xN-1) à (11 x N -1) paramètres d'un côté et par exemple 27 de l'autre.

Suivant des modes de réalisation, le modèle de caractérisation peut comprendre :
- un réseau de neurones, en particulier régressif, et encore plus particulièrement un réseau de neurones CNN à apprentissage profond. Un tel réseau de neurones peut, de manière nullement limitative, par exemple comprendre au moins une couche cachée associée à des sorties non linéaires pour modéliser les comportements non linéaires des relations à apprendre, et un nombre de neurones dans une première couche en relation avec le nombre de points de mesure de la performance, et un nombre de coefficients pour chaque neurone en relation avec le nombre de paramètres décrivant l'empilement et les indices optiques des lentilles ;
- un modèle de régression linéaire de polynômes ;
- une équation gaussienne, obtenue par une méthode des moindres carrés ; ou
- une méthode d'analyse statistique.

Suivant des modes de réalisation, au moins un jeu d'entrainement peut comprendre :
- au moins un jeu optique, dit jeu optique d'entrainement, relatif à un objectif optique d'architecture identique à l'architecture de l'objectif cible, et
- au moins un jeu de performance, dit jeu de performance d'entrainement, comprenant des données relatives à la performance dudit objectif optique.

Bien entendu, chaque jeu optique d'entrainement, respectivement chaque jeu de performance d'entrainement, comprend des données de même nature présentées suivant un même formalisme que le jeu optique mesuré, respectivement le jeu de performance estimé. Par conséquent, toutes les caractéristiques décrites plus haut en référence au jeu optique mesuré, respectivement au jeu de performance estimé, s'applique au jeu optique d'entrainement, respectivement au jeu de performance d'entrainement.

Suivant des modes de réalisation particulièrement avantageux, au moins un jeu d'entrainement peut être obtenu à partir d'un objectif faisant partie d'un même lot d'objectifs que l'objectif cible, lors de la fabrication dudit lot d'objectifs. Autrement dit, dans ce cas, la base d'entrainement est obtenue, en partie ou en totalité, par des mesures réalisées sur des objectifs optiques faisant partie du même lot que l'objectif optique cible et qui ont été fabriqués préalablement.

Ainsi, le modèle de caractérisation est plus précis et permet de réaliser une caractérisation fonctionnelle plus précise.

Par « objectifs de même lot », on entend des objectifs qui proviennent d'une même architecture (même « design ») conçue pour que les objectifs réalisent une performance optique similaire. En supplément, ces objectifs peuvent aussi avoir des caractéristiques de fabrication communes telles que provenir d'une même ligne de production, être produits avec une machine commune, à des périodes semblables, etc...

Dans ce cas, une première partie des objectifs optiques fabriqués d'un même lot est utilisée pour constituer une base d'entrainement. En particulier, pour chaque objectif optique de cette première partie du lot, un jeu d'entrainement est constitué en réalisant, pour ledit objectif optique fabriqué :
- au moins une mesure d'interférométrie optique pour obtenir au moins un jeu optique d'entrainement, et
- au moins une mesure fonctionnelle, pour obtenir au moins un jeu de de performance d'entrainement.

Ainsi, les premiers objectifs optiques fabriqués d'un lot permettent de constituer une base d'entrainement. Cette dernière est utilisée pour entrainer le modèle de caractérisation. Une fois le modèle de caractérisation entrainé, il est utilisé pour caractériser les objectifs optiques suivants dudit lot, lors de leur fabrication.

Suivant des modes de réalisation, pour au moins un jeu d'entrainement :
- le jeu optique d'entrainement est obtenu par simulation ; et/ou
- le jeu de performance d'entrainement est obtenu par simulation.

Par exemple, durant la phase de conception d'un objectif, son architecture peut être modélisée en représentant les interfaces optiques (particulièrement celles des lentilles) par des formulations analytiques et en indiquant numériquement leurs espacements. Les valeurs théoriques d'indice de réfraction et de nombre d'Abbé des matériaux impliqués peuvent aussi être données. Ces valeurs théoriques peuvent ensuite être entrées dans des logiciels de conception optique, disponibles commercialement, pour simuler et optimiser les paramètres définissant l'objectif en calculant les performances fonctionnelles théoriques. On connait par exemple le logiciel OpticStudio de la société Zemax qui calcule la propagation de rayons lumineux au travers d'empilements d'interfaces optiques, par calcul, au franchissement de chaque nouvelle interface rencontrée, d'un faisceau réfléchi et d'un faisceau transmis à partir d'un faisceau incident, par la mise en œuvre numérique des lois de Snell-Descartes. Il est ainsi possible de calculer assez parfaitement les propriétés de transfert optique par simulation de la propagation de rayons optiques, cela pour différents points de la scène à observer, et les différents points associés sur la zone de détection. Ces fonctions de transfert peuvent ainsi être transformées par le logiciel en résultat de calculs de MTF par transformée dans le domaine fréquentiel, autour de chaque point de détection choisi.

Ainsi, le jeu optique d'entrainement et/ou le jeu de performance d'entrainement composant au moins un jeu d'entrainement peu(ven)t être obtenu(s) par simulation. Ainsi, la base d'entrainement peut être constituée, en partie ou en totalité, par simulation ce qui est plus rapide, et implique moins d'effort et de ressources.

Par exemple, au moins un jeu de performance estimée, respectivement un jeu de performance d'entrainement mesuré ou simulé, peut comprendre :
- au moins une valeur de caractérisation de front d'onde, ou
- au moins une valeur de Fonction de Modulation de Transfert, ou « MTF » (pour « Modulation Transfert Fonction » en anglais) ;
pour au moins une position sur l'objectif.

Le jeu de performance estimé est fourni par le modèle de caractérisation.

Comme expliqué plus haut, le jeu de performance d'entrainement est soit mesuré sur un objectif réel, soit fournie par simulation à partir d'une modélisation numérique d'un objectif optique.

Suivant des modes de réalisation, le procédé selon l'invention peut comprendre préalablement à la première itération de la phase de caractérisation, une phase d'entrainement du modèle de caractérisation avec la base d'entrainements.

Suivant un autre aspect de la présente invention, selon la revendication 11, il est proposé un dispositif de caractérisation fonctionnelle, en cours de fabrication ou après fabrication, d'un objectif optique cible comprenant un empilement de plusieurs éléments optiques, ledit dispositif comprenant :
- un appareil d'interférométrie optique pour mesurer, sur ledit empilement d'éléments optiques, au moins un jeu de données, dit jeu optique mesuré, comprenant des données relatives à au moins un paramètre géométrique d'au moins une interface optique dudit objectif cible ; et
- un module informatique configuré pour exécuter un modèle de caractérisation préalablement entrainé avec une base d'entrainement constituée à partir d'objectifs optiques d'architecture identique à celle dudit objectif cible pour fournir, en fonction dudit au moins un jeu optique mesuré, un jeu de données, dit jeu de performance estimé, comprenant des données relatives à la performance dudit objectif cible.

Le dispositif de caractérisation peut de manière optionnelle comprendre une combinaison quelconque d'au moins une des caractéristiques décrites plus haut en référence au procédé de caractérisation selon l'invention et qui ne sont pas reprises ici en détail, par soucis de concision.

Le modèle de caractérisation est intégré dans un module informatique tel qu'un processeur, une puce, un ordinateur, une tablette, un serveur, etc. dédié ou non.

En particulier, le modèle de caractérisation peut être intégré dans l'appareil d'interférométrie optique. Alternativement, le modèle de caractérisation peut se trouver dans un appareil indépendant dudit appareil de mesure.

Suivant un autre aspect de la présente invention, il est proposé un procédé de fabrication d'un lot d'objectifs optiques comportant une deuxième phase de fabrication comprenant au moins une itération d'une étape de fabrication d'un objectif optique dudit lot comprenant les opérations suivantes :
- empilement des éléments optiques formant ledit objectif optique ; et
- caractérisation dudit objectif par le procédé de caractérisation selon l'invention.

Le jeu de performance estimé obtenu pour l'objectif optique peut être comparé à au moins une fourchette de valeurs de performance pour déterminer si les performances estimées de l'objectif optique sont satisfaisantes.

Si les performances estimées de l'objectif optique sont satisfaisantes, alors l'objectif optique peut être conservé.

Si les performances estimées de l'objectif optique ne sont pas satisfaisantes, alors l'objectif optique peut être soumis à au moins un autre test, par exemple par une mesure de MTF ou de front d'onde par un dispositif prévu à cet effet, en vue de vérifier, par mesure, la performance de l'objectif optique.

Alternativement ou en plus, si les performances estimées de l'objectif optique ne sont pas satisfaisantes, alors l'objectif optique peut être retouché pour améliorer ses performances. Par exemple, au moins un élément optique de l'objectif optique peut être repositionné ou remplacé.

Dans tous les cas, cet objectif optique peut contribuer à la construction de la base d'entrainement.

Avantageusement, le procédé de fabrication selon l'invention peut comprendre une première phase de fabrication, préalable à la deuxième phase de fabrication, comprenant au moins une itération d'une étape de fabrication d'un objectif optique dudit lot comprenant les opérations suivantes :
- empilement des éléments optiques formant ledit objectif optique,
- mesure, par interférométrie optique, d'au moins un jeu optique d'entrainement sur ledit objectif optique,
- mesure d'au moins un jeu de performance d'entrainement, et
- mémorisation, dans une base d'entrainement, d'un jeu d'entrainement formé par :
   ▪ ledit au moins un jeu optique d'entrainement, et
   ▪ ledit au moins un jeu de performance d'entrainement.

Cette première phase de fabrication permet de constituer une base d'entrainement pour entrainer le modèle de caractérisation utilisé lors de la deuxième phase de fabrication.

Suivant un autre aspect de la présente invention, il est proposé un système de fabrication d'objectifs optiques comprenant :
- au moins un moyen d'empilement des éléments optiques formant un objectif optique ; et
- un dispositif de caractérisation dudit objectif optique selon l'invention ;
configurés pour mettre en œuvre le procédé de fabrication selon l'invention.

Le système de fabrication peut en outre comprendre un appareil de mesure d'une donnée de performance d'un objectif optique, tel qu'un appareil de mesure de MTF ou un appareil de mesure de front d'onde.

L'objectif optique peut être un objectif optique d'un Smartphone et en particulier un objectif optique d'un module caméra d'un Smartphone.

Alternativement, l'objectif optique peut être un objectif optique d'une tablette et en particulier un objectif optique d'un module caméra d'une tablette.

Alternativement, l'objectif optique peut être un objectif optique d'une caméra, et en particulier d'une caméra installée dans un véhicule, et en particulier d'un véhicule autonome.

Le véhicule peut être tout type de véhicule, et en particulier un véhicule terrestre, tel qu'une voiture, autonome ou non.

Le véhicule peut être tout type de véhicule, et en particulier un véhicule volant, tel qu'un avion, un hélicoptère, un drone, etc. autonome ou non.

Alternativement, l'objectif optique peut être un objectif optique d'un appareil d'imagerie médicale.

L'appareil d'imagerie médicale peut être un appareil d'imagerie médicale prévu pour être introduit, au moins une partie, dans le corps d'un sujet.

Suivant des exemples de réalisation non limitatif, l'appareil d'imagerie médicale peut être un endoscope, et encore plus particulièrement d'un endoscope jetable.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un objectif optique pouvant être caractérisé par la présente invention ;
- les FIGURES 2a à 2f sont des représentations schématiques d'un exemple non limitatif de réalisation de mesure d'interférométrie optique pouvant être mise en œuvre dans la présente invention ;
- la FIGURE 3 est une représentation schématique d'un exemple de réalisation non limitatif d'un procédé selon l'invention de caractérisation fonctionnelle d'un objectif optique ;
- la FIGURE 4 est une représentation schématique d'un exemple de réalisation non limitatif d'un dispositif selon l'invention de caractérisation fonctionnelle d'un objectif optique ;
- la FIGURE 5 est une représentation schématique d'un exemple de réalisation non limitatif d'une phase d'entrainement pouvant être utilisée dans la présente invention pour entrainer un modèle de caractérisation fonctionnelle ; et
- la FIGURE 6 est une représentation schématique d'un exemple de réalisation non limitatif d'un procédé selon l'invention de fabrication d'un objectif optique.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

La FIGURE 1 est une représentation schématique d'un exemple de réalisation non limitatif d'un objectif optique pouvant être caractérisé par la présente invention.

Un objectif optique a pour fonction de focaliser une image d'une scène dans un plan image, généralement constitué par une caméra CMOS (dite « CMOS Imager System» qui fournit l'acronyme CIS). Un tel objectif optique est généralement constitué d'en empilement d'éléments optiques comprenant une combinaison quelconque d'éléments optiques tels que des lentilles, des rondelles d'espacement et d'opacification, etc.

Lors de la fabrication de l'objectif optique, également appelé « objectif » dans la suite, chaque élément optique dudit objectif est sélectionné individuellement et empilé avec les autres éléments optiques dans un barillet d'assemblage, selon un ordre donné. L'empilement est ensuite solidarisé avec le barillet par des techniques connues, par exemple par collage.

Après sa fabrication, l'objectif optique est testé fonctionnellement par des techniques connues, tel que par exemple par des mesures de MTF, en vue de tester la performance dudit objectif. De manière résumée, la mesure de MTF permet de tester la qualité de contraste de l'image d'une mire, en différents points de l'image, et le cas échéant pour différentes distances entre la mire et le système de mesure, avec, le cas échéant, différentes mises au point, ou ajustement de la distance objectif/image pour obtenir la netteté. La mesure de MTF fournit un jeu de valeurs pour des paramètres fonctionnels. Ces valeurs sont ensuite testées pour déterminer si chaque valeur d'un paramètre se trouve dans une fourchette prédéterminée associée à ce paramètre. Si toutes les valeurs mesurées, ou la plupart des valeurs mesurées, se trouvent dans les fourchettes prédéfinies, alors la performance fonctionnelle de l'objectif est jugée satisfaisante.

Bien entendu, la mesure de MTF est donnée à titre d'exemple seulement et n'est nullement limitative. D'autres techniques de mesure peuvent être utilisées pour tester la qualité de l'objectif optique, telle que par exemple une technique de mesure de front d'onde.

Dans la suite, on note :
- « JPE » un jeu de performance estimé selon la présente invention avec le modèle de caractérisation ;
- « JPA » un jeu de performance d'entrainement, soit mesuré par une technique de test de la qualité fonctionnelle de l'objectif (MTF ou Front d'onde par exemple), soit estimé par simulation.

Sur la FIGURE 1, et à titre d'exemple non limitatif seulement, l'objectif 100 comprend quatre lentilles 102-108 empilées dans une direction d'empilement 110, également appelé axe Z, dans un barillet 112. Au moins deux des lentilles 102-108 peuvent être séparées entre elles d'un espace vide, appelé « air gap », ou d'une entretoise ou rondelle, d'espacement, également appelée « spacer ».

Chaque lentille comporte deux interfaces, à savoir une interface, dite amont, et une interface, dite avale, dans la direction de l'empilement 110. Ainsi, la lentille 102 a une interface amont 114₁ et une interface avale 114₂, la lentille 104 a une interface amont 114₃ et une interface avale 114₄, la lentille 106 a une interface amont 114₅ et une interface avale 114₆ et la lentille 108 a une interface amont 114₇ et une interface avale 114₈.

La FIGURE 2a est une représentation schématique d'un exemple de réalisation non limitatif d'une mesure d'interférométrie optique pouvant être mise en œuvre par la présente invention.

La mesure d'interférométrie optique est réalisée par un appareil 200 d'interférométrie optique, représenté de manière très schématique, sur la FIGURE 2a. L'appareil 200 comprend une source 202 de lumière et un capteur d'interférométrie 204. La source 202 émet, en direction de l'empilement d'éléments optiques, un faisceau 206 de lumière cohérente, appelé faisceau de mesure, par exemple un faisceau laser, en un point de mesure, ou selon un champ de vue, 208 dans le plan X-Y, perpendiculaire à la direction 110. Le faisceau de mesure 206 parcourt alors l'empilement d'éléments optiques, en particulier dans l'axe Z 110 et traverse chaque interface optique 114ᵢ à tour de rôle. À chaque interface optique 114ᵢ, une partie 210ᵢ du faisceau de mesure 206 est réfléchie, tel que :
- un faisceau 210₁ est réfléchi par l'interface 114₁,
- un faisceau 210₈ est réfléchi par l'interface 114₄,

Chaque faisceau réfléchi 210ᵢ du faisceau de mesure 206 est alors capté par le capteur 204 se trouvant du même côté que la source d'émission 202, et va produire un signal d'interférence lorsque ce faisceau réfléchi 210ᵢ et un faisceau de référence 212, aussi issu de la source 202 de lumière se recombine sur le capteur 204, la différence des trajets parcourus par les deux faisceaux respectifs étant inférieure à la longueur de cohérence de la source d'émission 202. En particulier, pour chaque faisceau réfléchi 210ᵢ le capteur 204 fournit une raie d'interférence, dite raie principale, ou une image d'interférence, selon les modes d'illumination et de détection mises en œuvre, à une distance optique correspondant à la position de l'interface par rapport à la source d'émission 202, ou tout autre référence prédéterminée. Bien entendu, à part le faisceau 210₁ réfléchi par la première interface 114₁ rencontrée par le faisceau de mesure 206, une partie de chacun des autres faisceaux réfléchis 210₂-210₈ peut, elle-même, être réfléchie dans l'autre sens au passage d'une interface précédente, ce qui peut engendrer des faisceaux optiques à réflexion multiples (non représentés) captés par le capteur 204.Ces faisceaux à réflexions multiples engendrent des raies d'interférence, appelées raies secondaires, ou des images secondaires, généralement de plus faible amplitude.

Les mesures d'interférométrie optique peuvent être réalisées avec un faisceau de mesure d'un capteur interférométrique illuminé par une source lumineuse à faible cohérence. Pour cela, l'appareil d'interférométrie optique dispose de moyens de positionnement pour positionner relativement une zone de cohérence du capteur interférométrique 204 au niveau de l'interface à mesurer. L'interface à mesurer peut être une interface « enterrée », c'est-à-dire, l'une des interfaces à l'intérieur de l'élément optique. Pour arriver à une telle interface enterrée, le faisceau de mesure doit donc traverser d'autres interfaces de l'objectif optique. Le dispositif selon l'invention permet de détecter sélectivement un signal d'interférence pour chaque interface au niveau de laquelle la zone de cohérence est positionnée, c'est-à-dire pour chaque surface se trouvant dans la zone de cohérence puisque la longueur de cohérence de la source lumineuse est ajustée de sorte à être plus courte qu'une distance optique minimale entre deux interfaces optiques adjacentes de l'objectif optique. Ainsi, préférentiellement, pour chaque mesure, une seule interface se trouve dans la zone de cohérence.

Les mesures des interférences peuvent être effectuées selon un champ de vue déterminé par les moyens de mesure du dispositif. Les mesures peuvent ainsi être réalisées soit en plein champ, soit par balayage du champ de vue.

Des moyens numériques de traitement peuvent être configurés pour produire, à partir du signal d'interférence, une information de forme de l'interface mesurée selon le champ de vue.

Des exemples de dispositifs interférométriques pouvant être mis en œuvre dans le cadre de la présente invention sont décrits dans le document WO2020/245511 A1**.** Des dispositifs mettant en œuvre des illuminations selon un point de mesure et/ou un champ de vue y sont décrits.

La FIGURE 2b donne une représentation schématique et partielle de données de mesures brutes obtenues pour une mesure d'interférométrie optique, telle que celle décrite en référence à la FIGURE 2a.

Dans cet exemple de mise en œuvre, une illumination selon un point de mesure est utilisée et la zone de cohérence est déplacée le long de l'axe optique Z 110 grâce à des moyens de déplacement.

Ainsi, comme décrit en référence à la FIGURE 2a, chaque mesure d'interférence fournit des données brutes 220. Les données brutes 220 comprennent des raies principales 222ᵢ, chaque raie principale correspondant à une interface optique. Par exemple, on obtient une raie principale 222₁ pour l'interface 114₁, une raie principale 222₂ pour l'interface 114₂, etc. (l'interface 114₈ n'apparaissant pas sur l'exemple illustré par la FIGURE 2b).

Les données brutes 220 comprennent aussi des raies secondaires correspondant à des réflexions multiples, et associées aux interfaces 114₂-114₈.

La position optique de chaque raie est donnée en abscisse et l'amplitude normalisée de chaque raie est donnée en ordonnées.

Les FIGURES 2c-2f sont des représentations schématiques et partielles d'un autre exemple de données de mesures brutes obtenues pour une mesure d'interférométrie optique, telle que celle décrite en référence à la FIGURE 2a

Dans l'exemple représenté sur les FIGURES 2c-2f, une illumination selon un mode plein champ est utilisée et la zone de cohérence a été positionnée afin de mesurer une surface de lentille enterrée. La FIGURE 2c présente le signal d'interférence détecté lors d'une mesure de microscopie par holographie numérique (« Digital Holography Microscopy (DHM)», en anglais). Les FIGURES 2d et 2e représentent respectivement les images d'amplitude et de phase (dans cet exemple repliée) calculées à partir du signal d'interférence. La FIGURE 2f est une image de la topographie de la surface d'une lentille enterrée obtenue à partir de l'information de phase.

Suivant des modes de réalisation du procédé selon l'invention de caractérisation d'un objectif optique, il est possible d'utiliser un jeu optique mesuré comprenant les données de mesure brutes, en partie ou en totalité, à savoir :
- dans une configuration d'illumination selon un point de mesure, par exemple :
   ▪la position, et éventuellement l'amplitude, de chaque raie principale, ou
   ▪la position, et éventuellement l'amplitude, de chaque raie (principale et secondaire) ;
- dans une configuration d'illumination selon un champ de vue, par exemple :
   ▪l'image d'interférence détectée par le capteur d'interférométrie 204,
   ▪l'image d'amplitude associée à l'image d'interférence et/ou l'image de phase associée à l'image d'interférence, ou
   ▪l'image de topographie associée à l'image d'interférence.

Suivant des modes de réalisation, il est possible d'utiliser un jeu optique mesuré comprenant, non pas des données de mesure brutes obtenues par une mesure d'interférométrie optique, mais des valeurs de paramètres géométriques relatives aux interfaces optiques de l'objectif, à savoir :
- la position, le long de l'axe Z, de chaque interface 114ᵢ ou de chaque élément optique 102-108. Ces valeurs de distances peuvent être obtenues à partir des données brutes d'une seule mesure interférométrique. Dans ce cas, le jeu optique mesuré comprend une valeur de distance par interface, respectivement par élément optique ;
- le décentrement par rapport à l'axe Z ou relativement à d'autres interfaces, dans le plan X-Y, de chaque interface 114ᵢ ou de chaque élément optique 102-108. Ces valeurs de décentrement peuvent être déduites à partir d'une image d'interférence associée à une interface optique, par exemple. Dans ce cas, le jeu optique mesuré comprend deux valeurs (signées) de distance (une selon l'axe X et l'autre selon l'axe Y) pour chaque interface, respectivement élément optique ;
- l'inclinaison par rapport à l'axe Z, ou à l'inclinaison d'autres interfaces optiques de chaque interface optique 114ᵢ ou de chaque élément optique 102-108. Ces valeurs d'inclinaison peuvent être déduites à partir de plusieurs mesures interférométriques réalisées en différents points de mesure, en particulier dans une zone périphérique de l' objectif optique. Dans ce cas, le jeu optique mesuré comprend deux valeurs d'angle (une par rapport l'axe X et l'autre par rapport à l'axe Y) pour chaque interface, respectivement élément optique.

Dans la suite, on note JO, un jeu optique mesuré obtenue par mesure d'interférométrie optique sur l'empilement des éléments optiques composant l'objectif optique.

Suivant des modes de réalisation, il est possible d'utiliser un seul JO mesuré d'un objectif optique pour estimer un jeu de performance estimé, JPE, dudit objectif.

Suivant des modes de réalisation, il est possible d'utiliser plusieurs JO mesuré pour estimer un JPE pour un objectif optique cible. Dans ce cas, les JOs mesurés peuvent être concaténés ou fournis individuellement. Par exemple, il est possible d'utiliser un JO relatif à la position dans l'axe Z, un JO mesuré relatif au décentrement par rapport à l'axe Z dans le plan X-Y, et un JO mesuré relatif à l'inclinaison par rapport à l'axe Z.

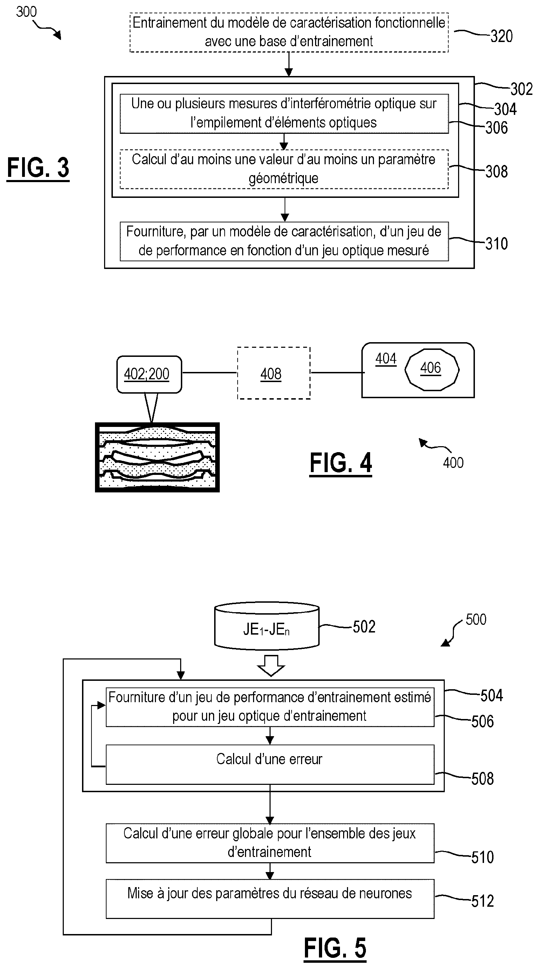

La FIGURE 3 est une représentation schématique d'un exemple de réalisation non limitatif d'un procédé selon l'invention de caractérisation fonctionnelle d'un objectif optique.

Le procédé 300 de la FIGURE 3 peut être utilisé pour la caractérisation d'un objectif optique comprenant plusieurs lentilles, tel que par exemple l'objectif optique 100 de la FIGURE 1, sans y être limité.

Le procédé 300 comprend une phase 302 de caractérisation d'un objectif optique, dit objectif cible, lors de sa fabrication.

La phase de caractérisation 302 comprend une étape 304 de mesure d'interférométrie optique sur l'empilement des éléments optiques de l'objectif cible. Cette étape de mesure 304 réalise, sur l'empilement des éléments optiques de l'objectif, une ou plusieurs mesures d'interférométrie optique 306, tel que par exemple la mesure d'interférométrie optique décrite en référence aux FIGURES 2a-2f, sans pour autant y être limitée.

Cette étape de mesure 304 fournit un ou plusieurs jeux optiques mesurés JO₁-JOₘ, avec m≥1.

Suivant un exemple de réalisation non limitatif, chaque jeu optique mesuré JOᵢ comprend la position de chaque raie d'interférence principale tel que JOᵢ={P_{1,i}, ..., P_{n,i}}, avec n le nombre d'interface et n≥2. Bien entendu, chaque jeu optique mesuré JOᵢ peut comprendre d'autres données, tel que décrit plus haut en référence aux FIGURES 2a-2f.

Lorsqu'au moins un jeu optique mesuré JOᵢ comprend au moins une valeur d'au moins un paramètre géométrique relative à au moins une interface optique, ou un élément optique, de l'objectif cible, tel qu'une distance géométrique, une épaisseur, une inclinaison par rapport à l'axe Z, un décentrement par rapport à l'axe Z dans le plan X-Y, etc. l'étape de mesure 304 comprend une étape 308 de calcul de ladite au moins une valeur du paramètre géométrique à partir des données de mesure brutes, par exemple à partir de la position, et/ou de l'amplitude, des raies d'interférences Cette étape 308 est optionnelle est n'est pas nécessairement mise en œuvre lorsque le, ou chaque, jeu optique mesuré JOᵢ comprend des données brutes.

Lors d'une étape 310, les jeux optiques mesurés JO₁-JOₘ sont fournis à un modèle de caractérisation préalablement entrainé. Ce modèle de caractérisation fournit en réponse un jeu de performance estimé JPE pour ledit objectif cible.

Le JPE peut comprendre une ou plusieurs valeurs. Préférentiellement, le JPE comprend plusieurs valeurs.

Au moins une valeur d'un JPE peut être une valeur estimée :
- d'une Fonction de Modulation de Transfert, MTF ; ou
- d'une mesure de de front d'onde, ou encore
- de toute autre fonction de caractérisation fonctionnelle de la qualité de l'objectif.
pour au moins un point de mesure de l'objectif cible.

La phase de caractérisation 302 peut être répétée autant de fois que souhaité pour caractériser plusieurs objectifs cibles.

De manière optionnelle, le procédé 300 peut comprendre une phase 320 d'entrainement du modèle de caractérisation avec une base d'entrainement comprenant plusieurs jeux d'entrainements obtenus à partir d'objectifs d'architecture identique à celle de l'objectif cible, soit par mesure soit par simulation.

Ainsi, le procédé 300 permet une caractérisation fonctionnelle de l'objectif optique cible par estimation avec un modèle de caractérisation préalablement entrainé, sans réaliser de mesure de la qualité fonctionnelle dudit objectif cible, ni de mesure des paramètres individuels de chaque élément optique de l'objectif préalablement à leur empilement.

La FIGURE 4 est une représentation schématique d'un exemple de réalisation non limitatif d'un dispositif selon l'invention de caractérisation fonctionnelle d'un objectif lors de sa fabrication.

Le dispositif 400 comprend un appareil 402 d'interférométrie optique pour réaliser au moins une mesure interférométrique en vue d'obtenir au moins un jeu optique mesuré. L'appareil 402 peut par exemple être l'appareil d'interférométrie optique 200 de la FIGURE 2a.

Le dispositif 400 comprend en outre un module 404 de caractérisation exécutant un modèle 406 de caractérisation fonctionnelle d'un objectif optique, à partir d'au moins un jeu optique mesuré. Le modèle de caractérisation fonctionnelle 406 peut être un programme ou une application informatique et se présenter sous la forme :
- d'un réseau de neurones, en particulier régressif, et encore plus particulièrement un réseau de neurones CNN à apprentissage profond, ou
- un modèle de régression linéaire de polynômes,
- une équation gaussienne, obtenue par une méthode des moindres carrés,
- une méthode d'analyse statistique,
- etc.

Le module de caractérisation 404 peut être tout module de calcul ou tout module informatique exécutant le modèle de caractérisation 406, tel qu'un serveur, un ordinateur, une tablette, un processeur, un calculateur, une puce électronique, etc.

De manière optionnelle, le dispositif de caractérisation 400 peut comprendre un module de calcul 408 pour calculer au moins une valeur d'un paramètre géométrique relatif aux interfaces, ou éléments, optiques de l'objectif optique, à partir des données de mesure brutes fournies par l'appareil d'interférométrie optique 402. Dans ce cas, l'au moins un jeu optique mesuré comprend des valeurs de paramètres géométriques calculées par ledit module de calcul 408.

La FIGURE 5 est une représentation schématique d'un exemple de réalisation non limitatif d'une phase d'entrainement pouvant être utilisé dans la présente invention pour entrainer un modèle de caractérisation fonctionnelle.

La phase d'entrainement 500 de la FIGURE 5 peut être utilisée pour entrainer le modèle de caractérisation utilisé dans le procédé selon l'invention de caractérisation fonctionnelle d'un objectif optique, et par exemple le procédé 300 de la FIGURE 3, lorsque le modèle d'entrainement est un réseau de neurones.

Le réseau de neurones utilisé peut être un réseau de neurones CNN (pour « Convolutionnal Neural Network »), comportant par exemple une couche cachée. Il est important de noter que le nombre de neurones du réseau est fonction du nombre de données dans l'au moins un jeu optique mesuré fourni en entrée dudit réseau de neurones, et du nombre de données dans l'au moins un jeu de performance souhaité en sortie.

La phase d'entrainement 500 est réalisée avec une base d'entrainement 502 comprenant une multitude de jeux de données d'entrainement, notés JE₁-JEₖ, Chaque jeu d'entrainement JEᵢ comprend :
- au moins un jeu optique d'entrainement, JOAᵢ, obtenu, par mesure ou par simulation, à partir d'un objectif optique dont l'architecture est identique à celle de l'objectif optique cible qui sera caractérisé par le modèle de caractérisation, une fois entrainé ;
- un jeu de performance d'entrainement, JPAᵢ, obtenu par mesure ou par simulation, sur ledit objectif optique, par la fonction de caractérisation fonctionnelle dont on veut estimer la valeur, sur l'objectif cible, avec le modèle de caractérisation une fois entrainée, tel que par exemple la fonction MTF.

La phase d'entrainement 500 comprend une étape 504 d'entrainement.

L'étape d'entrainement 504 comprend une étape 506 lors de laquelle un jeu optique d'entrainement, par exemple JOA₁, d'un premier jeu d'entrainement, par exemple JE₁, est donné en entrée du réseau de neurones. Le réseau de neurones donne en sortie un jeu de performance d'entrainement estimé, noté JPA₁^{e}.

Lors d'une étape 508, une erreur, E₁, est calculée entre le jeu JPA₁^{e} et le jeu de performance d'entrainement, JPA₁, dudit jeu d'entrainement JE₁. L'erreur calculée E₁ peut par exemple être une distance euclidienne ou une distance cosinus entre le jeu JPA₁^{e} et le jeu JPA₁.

L'étape d'entrainement 504 est réitérée pour chaque jeu d'entrainement JE₁-JEₖ, de sorte qu'il est obtenu k valeurs d'erreur E₁-Eₖ associées respectivement à chaque jeu d'entrainement JE₁-JEₖ.

Lors d'une étape 510 une erreur globale est calculée pour l'ensemble des jeux d'entrainement, JE₁-JEₖ, par exemple en additionnant les k erreurs JE₁-JEₖ obtenues.

Lors d'une étape 512, les coefficients, ou poids, du réseau de neurones CNN sont mis à jour, par exemple par un algorithme de retropropagation du gradient de l'erreur.

Les étapes 504-512 sont répétées plusieurs fois jusqu'à ce que l'erreur global calculée à l'étape 510 ne varie plus pendant plusieurs, par exemple 5, itérations successives. Lorsque c'est le cas, le réseau de neurones CNN est considéré suffisamment entrainé.

Alternativement, ou en plus de ce qui vient d'être décrit, il est possible d'utiliser une première partie de la base d'entrainement 502, par exemple JE₁-JEⱼ, pour l'entrainement du réseau de neurones et une deuxième partie de la base d'entrainement, par exemple JEⱼ₊₁-JEₖ, pour valider l'entrainement du réseau de neurones. Si les sorties du réseau de neurones obtenues sont assez proches des valeurs attendues, l'apprentissage est considéré comme acceptable. Sinon, plus de jeux d'entrainements sont présentés, ou bien la topologie du réseau est modifiée (nombre de couches, nombre de neurones par couches...) jusqu'à obtention d'un apprentissage satisfaisant.

Bien entendu, le modèle de caractérisation fonctionnelle n'est pas limité à un réseau de neurones.

Suivant une alternative, le modèle de caractérisation fonctionnelle peut comprendre, ou peut être, une méthode de recherche de corrélations, par exemple par méthode de régression, entre le jeu optique d'entrainement JOAᵢ et le jeu de performance d'entrainement JPAᵢ de chaque jeu d'entrainement JEᵢ.

Suivant un exemple de réalisation, la recherche des corrélations peut se faire via une méthode des moindres carrés. Elle peut consister à la mise en place d'une relation polynomiale supposée entre les JPAᵢ et JOAᵢ, et cela pour chaque JEᵢ. Ensuite, la méthode des moindres carrés permet de trouver le meilleur jeu de coefficients des polynômes qui minimise l'erreur entre les sorties calculées par les polynômes obtenus et les IPAᵢ.

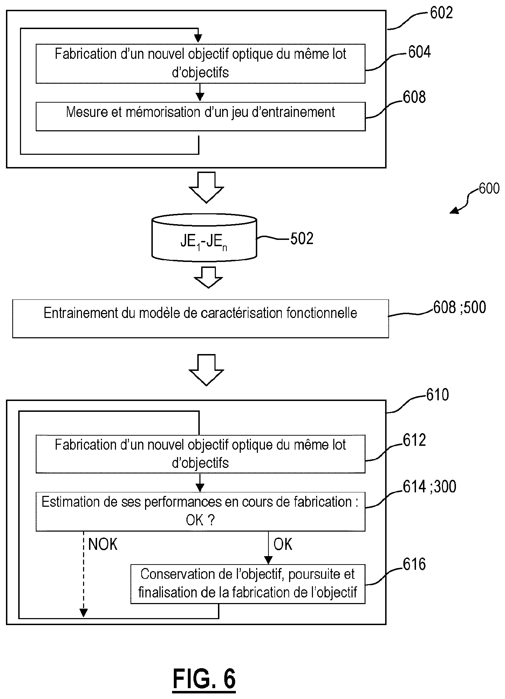

La FIGURE 6 est une représentation schématique d'un exemple de réalisation non limitatif d'un procédé selon l'invention de fabrication d'objectifs optiques selon l'invention.

Le procédé 600 peut comprendre une première phase 602 de fabrication lors de laquelle une première partie d'un lot d'objectifs est fabriqué. Cette première partie comprend une multitude d'objectifs optiques. Lors de cette phase 602 un objectif optique est fabriqué lors d'une étape 604, puis un jeu d'entrainement JE est mesuré et mémorisé lors d'une étape 606, en vue de constituer une base d'entrainement, tel que par exemple la base d'entrainement 502.

Puis, lors d'une étape 608, le modèle de caractérisation est entrainé avec la base d'entrainement, par exemple en mettant œuvre la phase d'entrainement 500 de la FIGURE 5.

Le procédé 600 peut ensuite comprendre une deuxième phase 610 de fabrication lors de laquelle les objectifs restant du lot sont fabriqués.

Cette phase comprend, pour chaque objectif optique, une étape 612 de début de fabrication dudit objectif optique, au moins jusqu'à l'empilement des éléments optiques composant ledit objectif optique.

Lors d'une étape 614, l'objectif optique en cours de fabrication, ou après fabrication, est caractérisé, en utilisant le modèle de caractérisation obtenu à l'étape 608, par le procédé selon l'invention de caractérisation fonctionnelle, et en particulier par le procédé 300 de la FIGURE 3.

Si la performance estimée de l'objectif optique est jugée satisfaisante, sa fabrication est poursuivie ou validée lors d'une étape 616.

Si les performances estimées de l'objectif optique ne sont satisfaisantes, alors l'objectif optique peut être soumis à au moins un autre test, par exemple par une mesure de MTF ou de front d'onde par un dispositif prévu à cet effet, en vue de vérifier, par mesure, la performance de l'objectif optique.

Alternativement ou en plus, si les performances estimées de l'objectif optique ne sont satisfaisantes, alors l'objectif optique peut être retouché pour améliorer ses performances. Par exemple, au moins un élément optique de l'objectif optique peut être repositionné ou remplacé.

Bien entendu l'invention n'est pas limitée aux exemples qui viennent d'être décrits.

## Revendications

1. Procédé (300) de caractérisation fonctionnelle, en cours de fabrication ou après fabrication, d'un objectif optique cible (100) comprenant plusieurs éléments optiques (102-108), ledit procédé (300) comprenant une phase (302) de caractérisation dudit objectif optique cible (100) comprenant les étapes suivantes et réalisée après empilement desdits éléments optiques :
- mesure (304), par interférométrie optique sur ledit empilement d'éléments optiques (102-108), d'au moins un jeu de données, dit jeu optique mesuré, comprenant des données relatives à au moins un paramètre géométrique de chacune d'au moins deux interfaces optiques (114₁-114₈) dudit objectif cible (100) ; le procédé étant **caractérisé par** l'étape suivante :
- fourniture (310), en fonction dudit au moins un jeu optique mesuré, d'un jeu de données, dit jeu de performance estimé, comprenant des données estimées relatives à la performance dudit objectif cible (100), par un modèle de caractérisation préalablement entrainé avec une base, dite base d'entrainement, de jeux d'entrainements constituée à partir d'objectifs optiques d'architecture identique à celle dudit objectif cible (100).

2. Procédé (300) selon la revendication précédente, **caractérisé en ce que** l'étape de mesure (304) réalise plusieurs mesures (306) d'interférométrie optique, fournissant un ou plusieurs jeux optiques mesurés.

3. Procédé (300) selon l'une quelconque des revendications précédentes, **caractérisé en ce qu'**au moins un jeu optique mesuré comprend, une partie ou la totalité, des valeurs de mesure brutes (220) fournies par au moins une mesure d'interférométrie optique.

4. Procédé (300) selon l'une quelconque des revendications précédentes, **caractérisé en ce qu'**au moins un jeu optique mesuré comprend au moins une valeur géométrique relative à au moins une interface optique (114₁-114₈) de l'objectif cible (100), l'étape de mesure (304) comprenant les étapes suivantes :
- au moins une mesure (306) d'interférométrie optique fournissant, chacune, des données brutes, et
- calcul (308) de ladite au moins une valeur géométrique par traitement desdites données brutes.

5. Procédé (300) selon l'une quelconque des revendications précédentes, **caractérisé en ce que** le modèle de caractérisation comprend :
- un réseau de neurones, en particulier régressif, et encore plus particulièrement un réseau de neurones CNN à apprentissage profond,
- un modèle de régression linéaire de polynômes,
- une équation gaussienne, obtenue par une méthode des moindres carrés, ou
- une méthode d'analyse statistique.

6. Procédé (300) selon l'une quelconque des revendications précédentes, **caractérisé en ce que** la base d'entrainement (502) comprend au moins un jeu d'entrainement obtenu à partir d'un objectif faisant partie d'un même lot d'objectifs que l'objectif cible, lors de la fabrication dudit lot d'objectifs.

7. Procédé (300) selon l'une quelconque des revendications précédentes, **caractérisé en ce qu'**au moins un jeu d'entrainement comprend :
- au moins un jeu optique, dit d'entrainement, relatif à un objectif optique d'architecture identique à l'architecture de l'objectif cible, et
- au moins un jeu de performance, dit jeu de performance d'entrainement, comprenant des données relatives à la performance dudit objectif optique.

8. Procédé (300) selon la revendication 7, **caractérisé en ce que**, pour au moins un jeu d'entrainement :
- le jeu optique d'entrainement est obtenu par simulation ; et/ou
- le jeu de performance d'entrainement est obtenu par simulation.

9. Procédé (300) selon l'une quelconque des revendications 7 ou 8, **caractérisé en ce qu'**au moins un jeu de performance estimé, respectivement au moins un jeu de performance d'entrainement, comprend :
- au moins une valeur de mesure caractérisation de front d'onde, ou
- au moins une valeur de Fonction de Modulation de Transfert, ou « MTF » (pour « Modulation Transfert Fonction » en anglais) ;
pour au moins une position sur l'objectif optique.

10. Procédé (300) selon l'une quelconque des revendications précédentes, **caractérisé en ce qu'**il comprend, préalablement à la première itération de la phase de caractérisation (302), une phase (320) d'obtention du modèle de caractérisation avec la base d'entrainement (502).

11. Dispositif (400) de caractérisation fonctionnelle, en cours de fabrication ou après fabrication, d'un objectif optique cible (100) comprenant un empilement de plusieurs éléments optiques (102-108), ledit dispositif (400) comprenant :
- un appareil d'interférométrie optique (402;200) pour mesurer, sur ledit empilement d'éléments optiques (102-108), au moins un jeu de données, dit jeu optique mesuré, comprenant des données relatives à au moins un paramètre géométrique de chacune d'au moins deux interfaces optiques (114₁-114₈) dudit objectif cible (100) ; le dispositif étant **caractérisé par** :
- un module informatique (404) configuré pour exécuter un modèle de caractérisation (406) préalablement entrainé avec une base d'entrainement (502) constitué à partir d'objectifs optiques d'architecture identique à celle dudit objectif cible (100) pour fournir, en fonction dudit au moins un jeu optique mesuré, un jeu de données, dit jeu de performance estimé, comprenant des données relatives à la performance dudit objectif cible (100).

12. Procédé (600) de fabrication d'un lot d'objectifs optiques comportant une deuxième phase de fabrication (610) comprenant au moins une itération d'une étape de fabrication d'un objectif optique dudit lot comprenant les opérations suivantes :
- empilement (612) des éléments optiques formant ledit objectif optique, et
- caractérisation (614;300) dudit objectif par le procédé de caractérisation selon l'une quelconque des revendications 1 à 10.

13. Procédé (600) selon la revendication précédente, **caractérisé en ce qu'**il comprend en outre une première phase de fabrication (602), préalable à la deuxième phase de fabrication (610), comprenant plusieurs itérations d'une étape de fabrication d'un objectif optique du lot d'objectifs comprenant les opérations suivantes :
- empilement (604) des éléments optiques formant ledit objectif optique,
- mesure (604), par interférométrie optique, d'au moins un jeu optique d'entrainement sur ledit objectif optique,
- mesure (604) d'au moins un jeu de performance d'entrainement, et
- mémorisation (608), dans une base d'entrainement, d'un jeu d'entrainement formé par :
▪ ledit au moins un jeu optique d'entrainement, et
▪ ledit au moins un jeu de performance d'entrainement.

14. Système de fabrication d'objectifs optiques comprenant :
- au moins un moyen d'empilement des éléments optiques formant un objectif optique ; et
- un dispositif de caractérisation (400) dudit objectif optique selon la revendication 11 ;
configurés pour mettre en œuvre le procédé de fabrication selon l'une quelconque des revendications 12 ou 13.

## Patentansprüche

1. Verfahren (300) zum funktionellen Charakterisieren, während der Herstellung oder nach der Herstellung, eines optischen Zielobjektivs (100), umfassend mehrere optische Elemente (102-108), wobei das Verfahren (300) eine Phase (302) des Charakterisierens des optischen Zielobjektivs (100) umfasst, welche die folgenden Schritte umfasst und nach dem Stapeln der optischen Elemente durchgeführt wird:
- Messen (304), durch optische Interferometrie an dem Stapel von optischen Elementen (102-108), mindestens eines Datensatzes, gemessener optischer Satz genannt, umfassend Daten bezüglich mindestens eines geometrischen Parameters von jeder von mindestens zwei optischen Grenzflächen (114₁-114₈) des Zielobjektivs (100);
wobei das Verfahren **gekennzeichnet ist durch** den folgenden Schritt:
- Bereitstellen (310), in Abhängigkeit von dem mindestens einen gemessenen optischen Satz, eines Datensatzes, geschätzter Leistungssatz genannt, umfassend geschätzte Daten bezüglich der Leistung des Zielobjektivs (100), durch ein Charakterisierungsmodell, das zuvor mit einer Basis, Trainingsbasis genannt, von Trainingssätzen trainiert wurde, die aus optischen Objektiven mit einer Architektur gebildet ist, die mit der des Zielobjektivs (100) identisch ist.

2. Verfahren (300) nach dem vorstehenden Anspruch, **dadurch gekennzeichnet, dass** mit dem Schritt des Messens (304) mehrere optische Interferometriemessungen (306) durchführt werden, wodurch ein oder mehrere gemessene optische Sätze bereitstellt werden.

3. Verfahren (300) nach einem der vorstehenden Ansprüche, **dadurch gekennzeichnet, dass** mindestens ein gemessener optischer Satz einen Teil oder die Gesamtheit der Rohmesswerte (220), die durch mindestens eine optische Interferometriemessung bereitgestellt werden, umfasst.

4. Verfahren (300) nach einem der vorstehenden Ansprüche, **dadurch gekennzeichnet, dass** mindestens ein gemessener optischer Satz mindestens einen geometrischen Wert bezüglich mindestens einer optischen Grenzfläche (114₁-114₈) des Zielobjektivs (100) umfasst, wobei der Schritt des Messens (304) die folgenden Schritte umfasst:
- mindestens eine optische Interferometriemessung (306), die jeweils Rohdaten bereitstellt, und
- Berechnen (308) des mindestens einen geometrischen Werts durch Verarbeiten der Rohdaten.

5. Verfahren (300) nach einem der vorstehenden Ansprüche, **dadurch gekennzeichnet, dass** das Charakterisierungsmodell umfasst:
- ein neuronales Netz, insbesondere regressiv, und noch spezieller ein neuronales CNN-Netz mit Deep Learning,
- ein lineares Regressionsmodell von Polynomen,
- eine Gaußsche Gleichung, erhalten durch eine Methode der kleinsten Quadrate, oder
- ein Verfahren zum statistischen Analysieren.

6. Verfahren (300) nach einem der vorstehenden Ansprüche, **dadurch gekennzeichnet, dass** die Trainingsbasis (502) mindestens einen Trainingssatz umfasst, der aus einem Objektiv, das zu derselben Objektivcharge wie das Zielobjektiv gehört, während der Herstellung der Objektivcharge erhalten wird.

7. Verfahren (300) nach einem der vorstehenden Ansprüche, **dadurch gekennzeichnet, dass** mindestens ein Trainingssatz umfasst:
- mindestens einen optischen Satz, Trainingssatz genannt, bezogen auf ein optisches Objektiv mit einer Architektur, die mit der des Zielobjektivs identisch ist, und
- mindestens einen Leistungssatz, Trainingsleistungssatz genannt, umfassend Daten bezüglich der Leistung des optischen Objektivs.

8. Verfahren (300) nach Anspruch 7, **dadurch gekennzeichnet, dass** für mindestens einen Trainingssatz:
- der optische Trainingssatz durch Simulation erhalten wird; und/oder
- der Trainingsleistungssatz durch Simulation erhalten wird.

9. Verfahren (300) nach einem der Ansprüche 7 oder 8, **dadurch gekennzeichnet, dass** mindestens ein geschätzter Leistungssatz beziehungsweise mindestens ein Trainingsleistungssatz umfasst:
- mindestens einen Messwert zur Wellenfrontcharakterisierung, oder
- mindestens einen Wert der Modulationsübertragungsfunktion, oder "MTF" (auf englisch "Modulation Transfer Function");
für mindestens eine Position auf dem optischen Objektiv.

10. Verfahren (300) nach einem der vorstehenden Ansprüche, **dadurch gekennzeichnet, dass** es vor der ersten Iteration der Charakterisierungsphase (302) eine Phase (320) zum Erhalten des Charakterisierungsmodells mit der Trainingsbasis (502) umfasst.

11. Vorrichtung (400) für die funktionelle Charakterisierung, während der Herstellung oder nach der Herstellung, eines optischen Zielobjektivs (100), umfassend einen Stapel aus mehreren optischen Elementen (102-108), die Vorrichtung (400) umfassend:
- eine optische Interferometrievorrichtung (402; 200) zum Messen, an dem Stapel optischer Elemente (102-108), mindestens eines Datensatzes, gemessener optischer Satz genannt, umfassend Daten bezüglich mindestens eines geometrischen Parameters von jeder von mindestens zwei optischen Grenzflächen (114₁-114₈) des Zielobjektivs (100);
wobei die Vorrichtung **gekennzeichnet ist durch**:
- ein Computermodul (404), das zum Ausführen eines Charakterisierungsmodells (406) konfiguriert ist, das zuvor mit einer Trainingsbasis (502) trainiert wurde, die aus optischen Objektiven mit einer Architektur gebildet ist, die mit der des Zielobjektivs (100) identisch ist, zum Bereitstellen, in Abhängigkeit von dem mindestens einen gemessenen optischen Satz, eines Datensatzes, geschätzter Leistungssatz genannt, umfassend Daten bezüglich der Leistung des Zielobjektivs (100).

12. Verfahren (600) zum Herstellen einer Charge von optischen Objektiven, umfassend eine zweite Herstellungsphase (610), umfassend mindestens eine Iteration eines Schritts zur Herstellung eines optischen Objektivs der Charge, umfassend die folgenden Vorgänge:
- Stapeln (612) der optischen Elemente, die das optische Objektiv ausbilden, und
- Charakterisieren (614; 300) des Objektivs durch das Verfahren zum Charakterisieren nach einem der Ansprüche 1 bis 10.

13. Verfahren (600) nach dem vorstehenden Anspruch, **dadurch gekennzeichnet, dass** es ferner eine erste Herstellungsphase (602) vor der zweiten Herstellungsphase (610) umfasst, umfassend mehrere Iterationen eines Schritts zur Herstellung eines optischen Objektivs der Charge von Objektiven, umfassend die folgenden Vorgänge:
- Stapeln (604) der optischen Elemente, die das optische Objektiv ausbilden,
- Messen (604), durch optische Interferometrie, mindestens eines optischen Trainingssatzes an dem optischen Objektiv,
- Messen (604) mindestens eines Trainingsleistungssatzes, und
- Speichern (608) eines Trainingssatzes in einer Trainingsdatenbank, ausgebildet durch:
▪ den mindestens einen optischen Trainingssatz, und
▪ des mindestens einen Trainingsleistungssatzes.

14. System für die Herstellung optischer Objektive, umfassend:
- mindestens ein Mittel zum Stapeln der optischen Elemente, die ein optisches Objektiv ausbilden; und
- eine Vorrichtung für die Charakterisierung (400) des optischen Objektivs nach Anspruch 11;
konfiguriert zum Implementieren des Herstellungsverfahrens nach einem der Ansprüche 12 oder 13.

## Claims

1. Method (300) for functional characterization, during manufacture or after manufacture, of a target optical objective (100) comprising several optical elements (102-108), said method (300) comprising a phase (302) of characterization of said target optical objective (100) comprising the following steps and performed after stacking said optical elements:
- measuring (304), by optical interferometry on said stack of optical elements (102-108), at least one data set, called measured optical set, comprising data relating to at least one geometric parameter of each of at least two optical interfaces (114₁-114₈) of said target objective (100);
said method being **characterized by** the following step:
- providing (310), based on said at least one measured optical set, a data set, called estimated performance set, comprising estimated data relating to the performance of said target objective (100), by a characterization model previously trained with a database, called training database, of training sets constituted based on optical objectives with an architecture identical to that of said target objective (100).

2. Method (300) according to the preceding claim, **characterized in that** the measuring step (304) performs several optical interferometry measurements (306), providing one or more measured optical sets.

3. Method (300) according to any one of the preceding claims, **characterized in that** at least one measured optical set comprises, partially or wholly, raw measurement values (220) provided by at least one optical interferometry measurement.

4. Method (300) according to any one of the preceding claims, **characterized in that** at least one measured optical set comprises at least one geometric value relating to at least one optical interface (114₁-114₈) of the target objective (100), the measurement step (304) comprising the following steps:
- at least one optical interferometry measurement (306) each providing raw data, and
- calculating (308) said at least one geometric value by processing of said raw data.

5. Method (300) according to any one of the preceding claims, **characterized in that** the characterization model comprises:
- a neural network, in particular a regression neural network, and even more particularly a deep learning convolutional neural network, CNN,
- a polynomial linear regression model,
- a Gaussian equation, obtained by a least squares method,
- a statistical analysis method.

6. Method (300) according to any one of the preceding claims, **characterized in that** the training database (502) comprises at least one training set obtained based on an objective forming part of a same batch of objectives as the target objective, during the manufacture of said batch of objectives.

7. Method (300) according to any one of the preceding claims, **characterized in that** at least one training set comprises:
- at least one optical set, called training optical set, relating to an optical objective with an architecture identical to the architecture of the target objective, and
- at least one performance set, called training performance set, comprising data relating to the performance of said optical objective.

8. Method (300) according to claim 7, **characterized in that**, for at least one training set:
- the training optical set is obtained by simulation; and/or
- the training performance set is obtained by simulation.

9. Method (300) according to any one of claims 7 or 8, **characterized in that** at least one estimated performance set, respectively at least one training performance set, comprises:
- at least one wavefront characterization measurement value, or
- at least one modulation transfer function, MTF, value;
for at least one position on the optical objective.

10. Method (300) according to any one of the preceding claims, **characterized in that** it comprises, prior to the first iteration of the characterization phase (302), a phase (320) of obtaining the characterization model with the training database (502).

11. Device (400) for functional characterization, during manufacture or after manufacture, of a target optical objective (100) comprising a stack of several optical elements (102-108), said device (400) comprising:
- an optical interferometry appliance (402; 200) for measuring, on said stack of optical elements (102-108), at least one data set, called measured optical set, comprising data relating to at least one geometric parameter of each of at least two optical interfaces (114₁-114₈) of said target objective (100);
said device being **characterized by**:
- a processing module configured for executing a characterization model (406) previously trained with a training database (502) constituted on the basis of optical objectives with an architecture identical to that of said target objective (100) in order to provide, based on said at least one measured optical set, a data set, called estimated performance set, comprising data relating to the performance of said target objective (100).

12. Method (600) for manufacturing a batch of optical objectives including a second manufacture phase (610) comprising at least one iteration of a step of manufacture of an optical objective of said batch comprising the following operations:
- stacking (612) the optical elements forming said optical objective; and
- characterizing (614; 300) said objective by the characterization method according to any one of claims 1 to 10.

13. Method (600) according to the preceding claim, **characterized in that** it also comprises a first manufacture phase (602), prior to the second manufacture phase (610), comprising several iterations of a step of manufacture of an optical objective of the batch of objectives comprising the following operations:
- stacking (604) the optical elements forming said optical objective,
- measuring (604), by optical interferometry, at least one training optical set on said optical objective,
- measuring (604) at least one training performance set, and
- storing (608), in a training database, a training set formed by:
▪ said at least one training optical set, and
▪ said at least one training performance set.

14. System for manufacturing optical objectives comprising:
- at least one means of stacking the optical elements forming an optical objective; and
- a device for characterizing (400) said optical objective according to the claim 11;
configured to implement the method of manufacture according to any one of claims 12 or 13.
